# EUROPEAN PATENT APPLICATION

(11) **EP 1 176 401 A2**
(43) Date of publication of application: **30.01.2002**
(21) Application number: 01305352.5
(22) Date of filing: 20.06.2001
(51) Int. Cl.: G01F 1/075, G01F 1/06

(54) **Flowmeter**

(30) Priority: 30.06.2000 US 607480
(71) Applicant: Saar, David A., Titusville, New Jersey 08560 (US)
(72) Inventor: Saar, David A., Titusville, New Jersey 08560 (US)
(74) Representative: Warren, Anthony Robert

(57) **Abstract**

A flowmeter (10) having a rotatable flow indicating device (14) including at least one target (16) and a computer controlled meter (22). The meter has a control including a sensor (18) for sensing the at least one target (16) when flow displaces the at least one target past the sensor. The sensor (18) is periodically turned on until the sensor senses a target. The sensor then remains on and a timer, having a set time duration, is turned on. The control has a volume counter. When the sensor senses the next target during the operation of the timer, the timer is restarted and the counter is updated by a selected volume. The timer is turned on when the timer means times out.

## Description

The present invention relates to a flowmeter for monitoring the flow of water through a pipe and more particularly to a battery operated flowmeter which can transmit flow related data (volume and/or temperature) to a remote receiver. To be practical, the individual flowmeters will be battery powered.

U.S. Patents Nos. 5,838,258 and 5,969,267, disclose such a system. In those systems a rotating vane, having one or more circumferentially spaced targets, rotates with flow. A sensor can sense the presence of a target as it rotates past the sensor, and the system is operated to check for flow at a rate that will assure that the sensor will sense each target as it is displaced past the sensor. In this way a count of the sensed target equates to volume.

It is accordingly an object of the present invention to provide a novel way of determining flow in a battery powered flowmeter which will prolong the life of the battery.

According to the present invention, there is provided a flowmeter as defined in claim 1.

Optional features of the flowmeter are defined in claims 2 and 3.

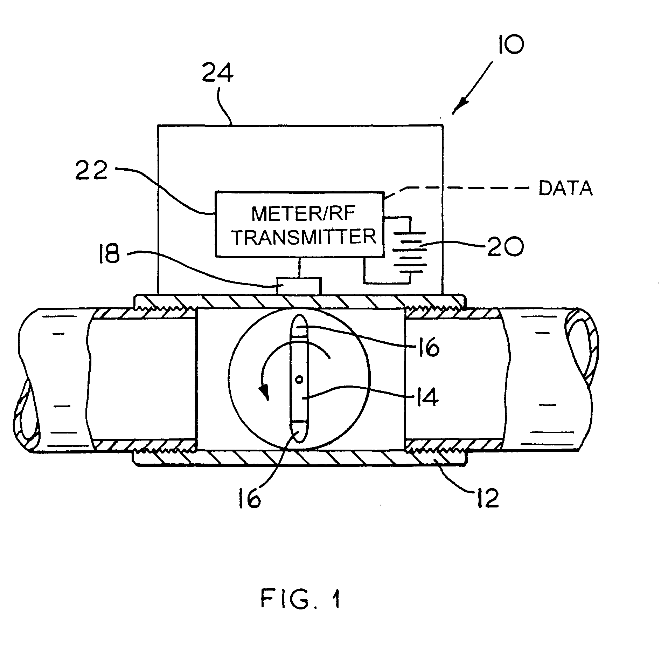

The accompanying drawings illustrate a presently preferred embodiment incorporating the principles of the invention, in which:-
Figure 1 is a schematic view of a flowmeter embodying the teachings of the present invention;

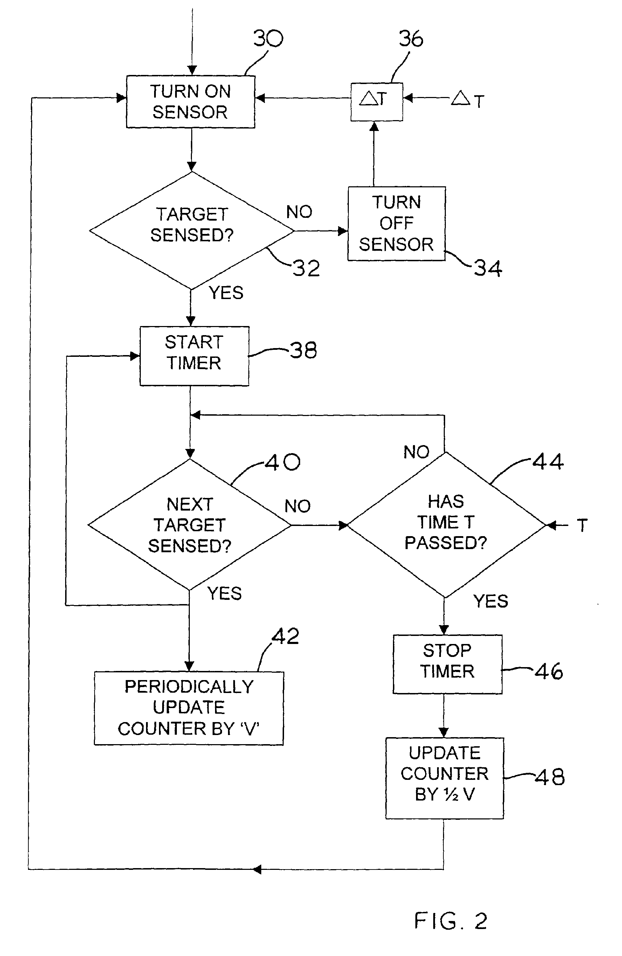

Figure 2 is a flow diagram illustrating the operation of the meter shown in figure 1; and
Figure 3 is a schematic diagram illustrating an accuracy algorithm for the flowmeter.

The flowmeter 10 has a pipe portion 12 in which a rotatable element 14 is located. This rotatable element rotates with flow and has one or more targets 16 which can be sensed (sense change of position, i.e., "present" to "not present" or vice versa) by a suitable sensor 18. The sensor 18, which may be a Hall sensor, is connected to a battery 20 powered, computer controlled meter/rf transmitter 22 which is contained within a suitable housing 24. Additional details of the flowmeter can be seen in copending US Application No. 09/524,502 and corresponding EP Application No. 01302262.9, incorporated by reference herein.

When the flowmeter is installed in the pipe the first thing that happens is that the sensor is turned "on" (Turn On Sensor/30). The sensor looks to sense a target (Target Sensed?/32) and if a target is not sensed, the sensor is turned off (Turn Off Sensor/ 34). Following the passage of a settable time (ΔT/36), the sensor is again turned on (Turn On Sensor/30) and the process continues until a target is sensed. Any sampling frequency can be selected such as eight times a second. Then, a timer is started (Start Timer/38). The next target is continuously looked for by the sensor. If the target is sensed (Next Target Sensed?/40) a counter will be updated by one volume increment (Update Counter By "V"/42). When the rotatable element rotates one increment (the angle between two targets) a volume "V" has flowed through the conduit) and the timer will again be started Start Timer/38. In the event that time T (which is settable) passes before the next target is sensed (Has Time "T" Passed?/44), the control concludes that flow has stopped and the timer is stopped (Stop Timer/46) and the counter is updated by 1/2V (a reasonable assessment of flow that was on at t=0 and off at t=T).

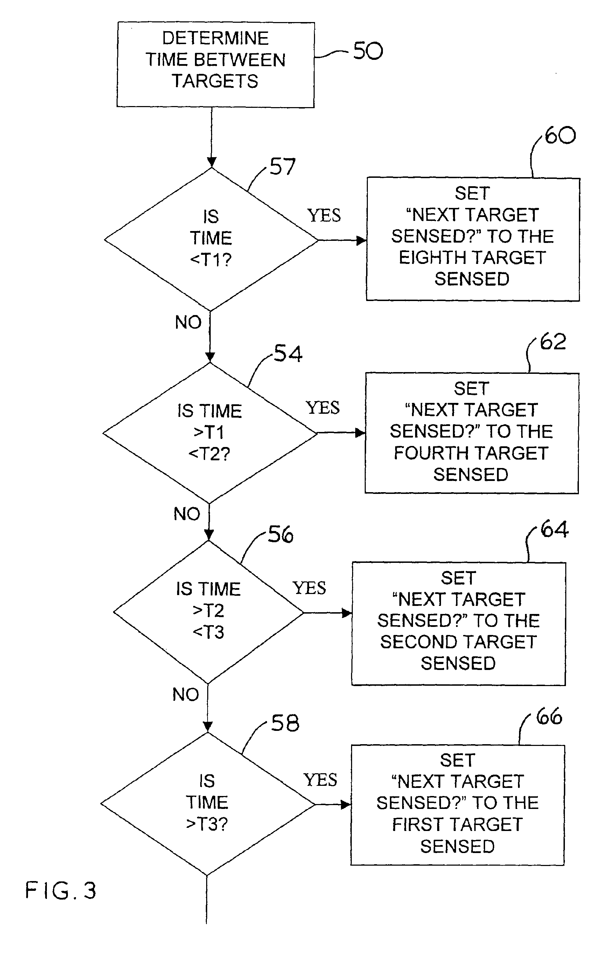

Since the power consumption of the timer is a function of the number of pulses per millisecond, it is desirable to use an slow running timer even though the pulses per millisecond are reduced and hence the accuracy at which the volume is determined will be adversely affected. The shorter the timed interval between pulses of the timer, the greater will be the possible error for rapid flow situations. The algorithm shown in Figure 3 will improve the accuracy of the volume data recorded in the volume counter. As shown in Figure 3, the time between successive sensed targets (Determine Time Between Targets/50) is calculated and depending on this time (Is Time <T1/52, Is Time >T1,<T2/54, Is Time >T2,<T3/56, Is Time >T3/58), the Next Target Sensed?/40 will be respectively set to the eighth (Set "Next Target Sensed?" To The Eighth Target Sensed/60), fourth (Set "Next Target Sensed?" To The Fourth Target Sensed/62), second (Set "Next Target Sensed?" To The Second Target Sensed/64), or first target (Set "Next Target Sensed?" To The First Target Sensed/66). The "V" amount updated can be determined in a variety of ways but may be determined by measuring the time between targets and computing targets per second. This number of targets would be added to a flow accumulator each second.

## Claims

1. A flowmeter comprising a rotatable flow indicating device including at least one target that will be displaced by flow and a computer controlled meter, including
a control including
a sensor for sensing the at least one target when flow displaces the target past the sensor,
turn on means for periodically turning on said sensor until said sensor senses a target,
a volume counter,
timer means having a set time duration,
control means for starting said timer means when said sensor senses a target,
means for restarting said timer and updating said counter by a selected volume when said sensor senses a selected successive target during the operation of said timer means, and
means for starting said turn on means in the event said timer means times out.

2. A flowmeter according to claim 1, further comprising means for updating said counter by a arbitrary amount when said timer times out.

3. A flowmeter according to claim 1 or 2, further comprising means for defining said selected successive target as a function of the rate of flow.
